# EUROPEAN PATENT APPLICATION

(11) **EP 4 430 974 A1**
(43) Date of publication of application: **18.09.2024**
(21) Application number: 21963351.8
(22) Date of filing: 08.11.2021
(51) Int. Cl.: A24F 40/57

(54) **INFORMATION PROCESSING DEVICE, HEATING PROFILE CHANGING METHOD, AND HEATING PROFILE CHANGING PROGRAM**

(71) Applicant: Japan Tobacco Inc., Tokyo 105-6927 (JP)
(72) Inventor: KATO, Masato, Tokyo 130-8603 (JP); SHIMADA, Yurina, Tokyo 130-8603 (JP)
(74) Representative: Hoffmann Eitle
(86) International application number: PCT/JP2021/041042
(87) International publication number: WO 2023/079759

(57) **Abstract**

An electronic apparatus (20) that acts as an information processing device for changing a heating profile of an aerosol generating device (10) comprises a control unit (21). The control unit (21): outputs, by means of a UI unit (24) of the electronic apparatus (20), information that represents a plurality of alternatives that include at least any of an alternative pertaining to the mental condition of a user, an alternative pertaining to a predetermined behavior or event, and an alternative pertaining to a fragrance inhaling taste of the aerosol generating device (10); receives the selection of any of the alternatives among the plurality of alternatives; and changes the heating profile corresponding to the selected alternative.

## Description

### TECHNICAL FIELD

The present invention relates to an information processing apparatus, a heating profile changing method, and a heating profile changing program that change a heating profile of an aerosol generating apparatus including a heating portion heating an aerosol source or a flavor source.

### BACKGROUND ART

An aerosol generating apparatus that enables to inhale an aerosol having a smoking taste and flavor is well-known in the related art. The smoking taste and flavor is a concept that includes either or both of flavor and smoking taste. The smoking taste is a general term for stimulation to a throat and lungs and senses of taste and smell that are perceived by inhaling an ingredient generated when tobacco leaves are heated. The smoking flavor is a general term for the senses of taste and smell that are perceived by inhaling an ingredient of an additive added to the tobacco leaves. In the following, the stimulation due to the smoking taste is also defined as a "sensation of tobacco".

In general, an aerosol generating apparatus delivers, to a user, an aerosol generated by heating an aerosol source with a heating portion (for example, an electric resistance type or an induction heating type heater). Further, the aerosol generating apparatus includes one that performs temperature control of the heating portion according to a predetermined profile. For example, Patent Literature 1 discloses a technique of selecting a temperature profile corresponding to the type of cigarette combined with a heater, and controlling electric power of a battery supplied to the heater based on the selected temperature profile.

### CITATION LIST

### PATENT LITERATURE

Patent Literature 1: Japanese Translation of PCT International Application Publication No. 2020-526208

### SUMMARY OF INVENTION

### TECHNICAL PROBLEM

In the aerosol generating apparatus, when a heating mode of the aerosol source or the flavor source by the heating portion is changed, the smoking taste and flavor of the generated aerosol also changes. In addition, the smoking taste and flavor desired by the user may change according to a situation of the user such as a mental state of the user. If the heating mode of the aerosol source or the flavor source can be changed appropriately according to the situation of the user, the user can easily obtain the desired smoking taste and flavor without changing the type of the aerosol source or the flavor source. However, in the related art, there is a problem that it is difficult to appropriately change the heating mode of the aerosol source or the flavor source in accordance with the situation of the user.

The present invention provides an information processing apparatus, a heating profile changing method, and a heating profile changing program that can appropriately change a heating profile of a heating portion heating an aerosol source or a flavor source in accordance with a situation of a user.

### SOLUTION TO PROBLEM

One aspect of the present invention is an information processing apparatus that changes a heating profile of an aerosol generating apparatus that includes a heating portion heating an aerosol source or a flavor source, in which
the information processing apparatus includes:
an output unit configured to output information indicating a plurality of options; and
a control unit configured to receive selection of one option among the plurality of options, and change the heating profile to a heating profile corresponding to the selected option, and
the control unit is configured to cause the output unit to output the information indicating the plurality of options including at least one of an option related to a mental state of a user, an option related to a predetermined action or event, and an option related to a smoking taste and flavor in the aerosol generating apparatus.

Further, one aspect of the present invention is a heating profile changing method for changing, by using an information processing apparatus, a heating profile of an aerosol generating apparatus that includes a heating portion heating an aerosol source or a flavor source, in which
a control unit provided in the information processing apparatus performs a process including:
a first step of causing an output unit provided in the information processing apparatus to output information indicating a plurality of options;
a second step of receiving selection of one option among the plurality of options; and
a third step of changing the heating profile to a heating profile corresponding to the selected option, and
the first step includes causing the information indicating the plurality of options to be output, the plurality of options including at least one of an option related to a mental state of a user, an option related to a predetermined action or event, and an option related to a smoking taste and flavor in the aerosol generating apparatus.

Further, one aspect of the present invention is a heating profile changing program for changing, by using an information processing apparatus, a heating profile of an aerosol generating apparatus that includes a heating portion heating an aerosol source or a flavor source, in which
a control unit provided in the information processing apparatus is caused to perform a process including:
a first step of causing an output unit provided in the information processing apparatus to output information indicating a plurality of options;
a second step of receiving selection of one option among the plurality of options; and
a third step of changing the heating profile to a heating profile corresponding to the selected option, and
the first step includes causing the information indicating the plurality of options to be output, the plurality of options including at least one of an option related to a mental state of a user, an option related to a predetermined action or event, and an option related to a smoking taste and flavor in the aerosol generating apparatus.

### ADVANTAGEOUS EFFECTS OF INVENTION

According to the present invention, it is possible to appropriately change the heating profile of the heating portion heating the aerosol source or the flavor source in accordance with the situation of the user.

### BRIEF DESCRIPTION OF DRAWINGS

FIG. 1 is a diagram illustrating an example of a heating profile changing system 1.
FIG. 2 is a diagram illustrating an example of an aerosol generating apparatus 100A which is a first configuration example of an aerosol generating apparatus 10.
FIG. 3 is a diagram illustrating an example of an aerosol generating apparatus 100B which is a second configuration example of the aerosol generating apparatus 10.
FIG. 4 is a diagram illustrating an example of a heating profile table 22a.
FIG. 5 is a flowchart illustrating an example of a heating profile changing process executed by an electronic device 20.
FIG. 6 is a diagram illustrating an example of an option presentation screen for first mode 600 displayed by the electronic device 20.
FIG. 7 is a diagram illustrating an example of an option presentation screen for second mode 700 displayed by the electronic device 20.
FIG. 8 is a diagram illustrating an example of an option presentation screen for third mode 800 displayed by the electronic device 20.
FIG. 9 is a diagram illustrating an option presentation screen 900 which is another example of the option presentation screen displayed by the electronic device 20.

### DESCRIPTION OF EMBODIMENTS

Hereinafter, an embodiment of the present invention will be described. In the following description, the same components are denoted by the same reference numerals, and the description thereof may be appropriately omitted or simplified.

### [Heating Profile Changing System]

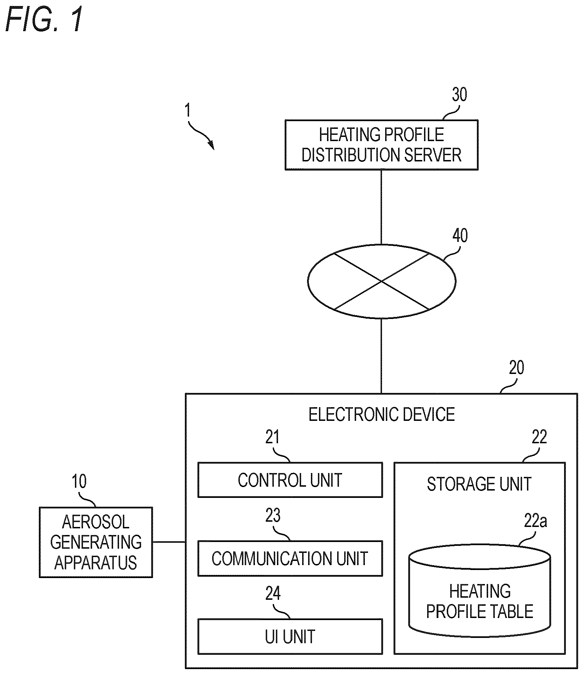

FIG. 1 is a diagram illustrating an example of a heating profile changing system 1. The heating profile changing system 1 is a system that is capable of changing a heating profile of an aerosol generating apparatus 10 including a heating portion for heating an aerosol source or a flavor source. Here, the heating profile is a control sequence that includes target temperature control of the heating portion. For example, the heating profile can be information defining a time-series transition of a target temperature of the heating portion in a predetermined period. The predetermined period can be, for example, a period from when the aerosol generating apparatus 10 is activated to when inhalation is performed for the predetermined number of times (for example, 15 times) or a predetermined time (for example, 5 minutes) elapses.

The heating profile changing system 1 includes the aerosol generating apparatus 10, an electronic device 20, and a heating profile distribution server 30. In the heating profile changing system 1, the electronic device 20 is provided to be capable of communicating with each of the aerosol generating apparatus 10 and the heating profile distribution server 30.

The aerosol generating apparatus 10 is an apparatus that generates an aerosol having a smoking taste and flavor from the aerosol source and the flavor source, and allows a user to inhale the generated aerosol. The aerosol generating apparatus 10 generates, for example, the aerosol atomized and/or vaporized (hereinafter, simply referred to as "atomized") by heating the aerosol source with the heating portion.

The aerosol generating apparatus 10 may include a heating portion that heats the flavor source. For example, when the aerosol source and the flavor source are provided by separate cartridges or the like, the aerosol generating apparatus 10 may separately include a heating portion for heating the aerosol source and the heating portion for heating the flavor source. Since a specific configuration example of the aerosol generating apparatus 10 will be described later, the description thereof is omitted here.

The electronic device 20 is an example of an information processing apparatus according to the present invention, and is, for example, a computer such as a smartphone, a tablet terminal, a personal computer, or a wearable terminal to be used by the user of the aerosol generating apparatus 10. For example, a predetermined application program (hereinafter, also referred to as a "heating profile changing application") provided by a manufacturer of the aerosol generating apparatus 10 is installed in the electronic device 20.

The electronic device 20 includes a control unit 21, a storage unit 22, a communication unit 23, and a user interface (UI) portion 24. The control unit 21 functions as an arithmetic processing device and a control device, and controls overall operations in the electronic device 20 according to various programs (for example, the heating profile changing application). The control unit 21 is implemented by, for example, an electronic circuit such as a central processing unit (CPU) or a microprocessor. The control unit 21 is an example of a control unit included in the information processing apparatus according to the present invention.

The storage unit 22 stores various kinds of information for an operation of the electronic device 20. The storage unit 22 is implemented by, for example, a nonvolatile storage medium such as a flash memory. The storage unit 22 stores, for example, a heating profile table 22a. Since contents of the heating profile table 22a will be described later, the description thereof is omitted here.

The communication unit 23 is a communication interface that can perform communication in accordance with any wired or wireless communication standard under the control of the control unit 21. As such a communication standard, for example, the Internet, cellular communication, Wi-Fi (registered trademark), or Bluetooth (registered trademark) may be adopted. For example, communication between the electronic device 20 and the aerosol generating apparatus 10 is performed by wired communication using a universal serial bus (USB) or the like, or wireless communication such as Wi-Fi or Bluetooth. Further, communication between the electronic device 20 and the heating profile distribution server 30 is performed via a network 40 implemented by the Internet, a cellular line, or the like.

The UI unit 24 includes an input device that receives an information input (an operation input) from the user, and an output device that outputs various kinds of information to the user. The input device of the electronic device 20 may be implemented by, for example, a touch panel, a keyboard, or a mouse. The output device of the electronic device 20 is an example of an output unit included in the information processing apparatus according to the present invention, and includes, for example, a display device that displays an image. As the display device, a liquid crystal display, an organic EL display, or the like can be adopted. Further, the output device of the electronic device 20 may include a sound output device such as a speaker that outputs sound, a light emitting device such as an LED that emits light, and a vibration device such as a vibrator that vibrates. Although details will be described later, the output device of the electronic device 20 outputs information indicating a plurality of options to the user under the control of the control unit 21. Accordingly, the electronic device 20 can present the plurality of options to the user.

The heating profile distribution server 30 is, for example, a server (a computer) that is managed by the manufacturer of the aerosol generating apparatus 10 and distributes a heating profile to the electronic device 20 and the like. The heating profile distributed by the heating profile distribution server 30 is, for example, prepared in advance by the manufacturer of the aerosol generating apparatus 10, and is stored in advance in a storage medium accessible by the heating profile distribution server 30. The heating profile distribution server 30 may be a virtual server (a cloud server) achieved in a cloud computing service, or may be a physical server achieved as a single device.

### [First Configuration Example of Aerosol Generating Apparatus 10]

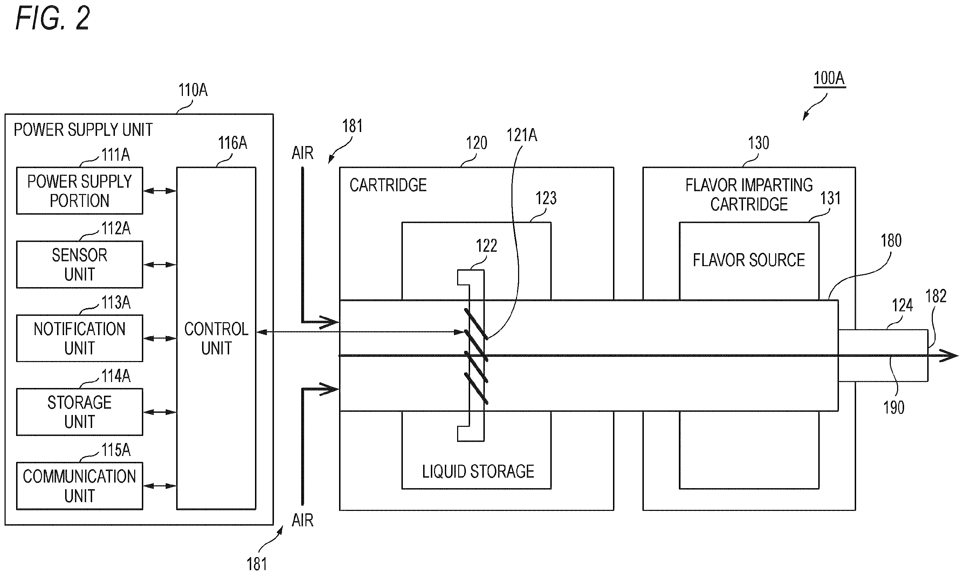

FIG. 2 is a diagram illustrating an example of an aerosol generating apparatus 100A which is a first configuration example of the aerosol generating apparatus 10. As illustrated in FIG. 2, the aerosol generating apparatus 100A includes a power supply unit 110A, a cartridge 120, and a flavor imparting cartridge 130. The power supply unit 110A includes a power supply portion 111A, a sensor unit 112A, a notification portion 113A, a storage unit 114A, a communication unit 115A, and a control unit 116A. The cartridge 120 includes a heating portion 121A, a liquid guiding portion 122, and a liquid storage unit 123. The flavor imparting cartridge 130 includes a flavor source 131 and a mouthpiece 124. An air flow path 180 is formed in the cartridge 120 and the flavor imparting cartridge 130.

The power supply portion 111A stores electric power. Further, the power supply portion 111A supplies the electric power to each constituent component of the aerosol generating apparatus 100A under the control of the control unit 116A. The power supply portion 111A may be implemented by, for example, a rechargeable battery such as a lithium ion secondary battery.

The sensor unit 112A acquires various kinds of information related to the aerosol generating apparatus 100A. As an example, the sensor unit 112A is implemented by a pressure sensor such as a condenser microphone, a flow rate sensor, a temperature sensor, or the like, and acquires a value associated with inhalation by the user. As another example, the sensor unit 112A is implemented by an input device that receives information input from the user, such as a button or a switch.

The notification portion 113A notifies the user of information. The notification portion 113A is implemented by, for example, a light emitting device that emits light, a display device that displays an image, a sound output device that outputs sound, a vibration device that vibrates, or the like.

The storage unit 114A stores various kinds of information for an operation of the aerosol generating apparatus 100A. The storage unit 114A is implemented by, for example, a nonvolatile storage medium such as a flash memory.

The communication unit 115A is a communication interface that can perform communication in accordance with any wired or wireless communication standard. As such a communication standard, for example, Wi-Fi or Bluetooth may be adopted.

The control unit 116A functions as an arithmetic processing device and a control device, and controls overall operations in the aerosol generating apparatus 100A according to various programs. The control unit 116A is implemented by, for example, an electronic circuit such as a CPU or a microprocessor.

The liquid storage unit 123 stores the aerosol source. The aerosol source is atomized to generate the aerosol. The aerosol source is, for example, a liquid such as water or a polyhydric alcohol such as glycerin and propylene glycol. The aerosol source may include a flavor ingredient derived from tobacco or non-tobacco. When the aerosol generating apparatus 100A is a medical inhaler such as a nebulizer, the aerosol source may contain a drug.

The liquid guiding portion 122 guides, from the liquid storage unit 123, the aerosol source which is a liquid stored in the liquid storage unit 123, and holds the aerosol source. The liquid guiding portion 122 is, for example, a wick formed by twisting a fiber material such as glass fiber or a porous material such as porous ceramic. In that case, the aerosol source stored in the liquid storage unit 123 is guided by a capillary effect of the wick.

The heating portion 121A heats the aerosol source to atomize the aerosol source to generate the aerosol. In the example illustrated in FIG. 2, the heating portion 121A is implemented by a coil and is wound around the liquid guiding portion 122. When the heating portion 121A generates heat, the aerosol source held in the liquid guiding portion 122 is heated and atomized, and the aerosol is generated. The heating portion 121A generates heat when supplied with the electric power from the power supply portion 111A. As an example, the electric power may be supplied when the sensor unit 112A detects that the user starts inhalation and/or that predetermined information is input. Further, when the sensor unit 112A detects that the user finishes inhalation and/or that the predetermined information is input, the supply of the electric power may be stopped.

The flavor source 131 is a constituent component for imparting a flavor ingredient to the aerosol. The flavor source 131 may include a flavor ingredient derived from tobacco or non-tobacco.

The air flow path 180 is a flow path for air inhaled by the user. The air flow path 180 has a tubular structure in which an air inlet hole 181 that is an inlet of the air into the air flow path 180 and an air outlet hole 182 that is an outlet of the air from the air flow path 180 are set as both ends. In the middle of the air flow path 180, the liquid guiding portion 122 is disposed on an upstream side (a side closer to the air inlet hole 181), and the flavor source 131 is disposed on a downstream side (a side closer to the air outlet hole 182). The air flowing from the air inlet hole 181 as a result of the inhalation by the user is mixed with the aerosol generated by the heating portion 121A, and is transported to the air outlet hole 182 through the flavor source 131 as shown by an arrow 190. When the mixed fluid of the aerosol and the air passes through the flavor source 131, the flavor ingredient contained in the flavor source 131 is imparted to the aerosol.

The mouthpiece 124 is a member that is held in the mouth of the user during the inhalation. The air outlet hole 182 is disposed in the mouthpiece 124. The user can take the mixed fluid of the aerosol and the air into the oral cavity by holding the mouthpiece 124 in the mouth and inhaling.

The configuration example of the aerosol generating apparatus 100A has been described above. It is needless to say that the configuration of the aerosol generating apparatus 100A is not limited to the above, and may adopt various configurations as exemplified below.

As an example, the aerosol generating apparatus 100A may not include the flavor imparting cartridge 130. In that case, the cartridge 120 is provided with the mouthpiece 124.

As another example, the aerosol generating apparatus 100A may include a plurality of types of aerosol sources. Further, other types of the aerosol may be generated by mixing a plurality of types of aerosol generated from the plurality of types of aerosol sources in the air flow path 180 and causing a chemical reaction.

A method for atomizing the aerosol source is not limited to heating by the heating portion 121A. For example, the method of atomizing the aerosol source may be vibratory atomization or induction heating.

### [Second Configuration Example of Aerosol Generating Apparatus 10]

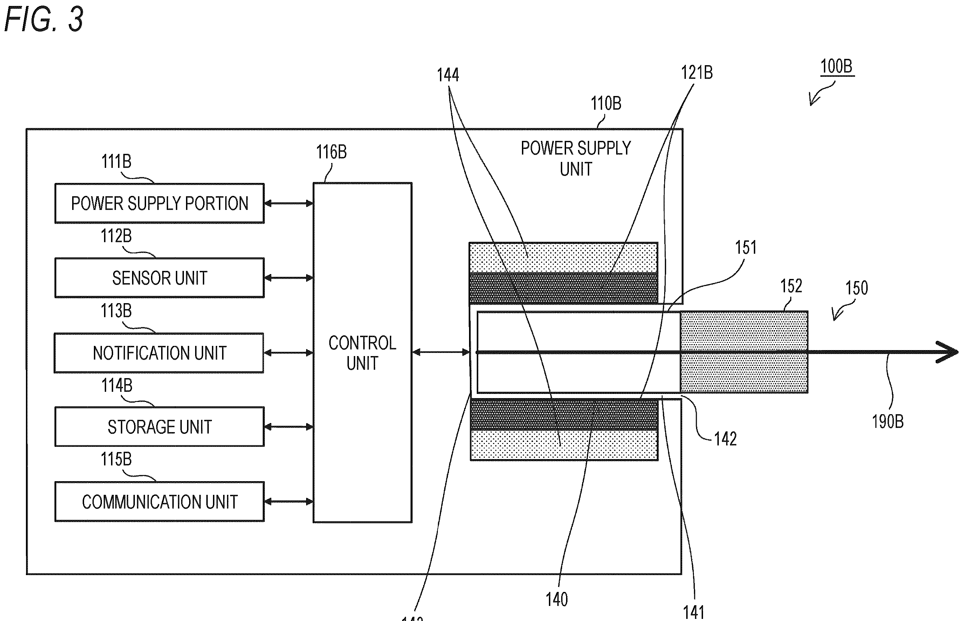

FIG. 3 is a diagram illustrating an example of an aerosol generating apparatus 100B which is a second configuration example of the aerosol generating apparatus 10. As illustrated in FIG. 3, the aerosol generating apparatus 100B includes a power supply unit 110B. The power supply unit 110B includes a power supply portion 111B, a sensor unit 112B, a notification portion 113B, a storage unit 114B, a communication unit 115B, a control unit 116B, the heating portion 121B, a holding portion 140, and a heat insulation portion 144.

The power supply portion 111B, the sensor unit 112B, the notification portion 113B, the storage unit 114B, the communication unit 115B, and the control unit 116B are substantially the same as the respective corresponding constituent components included in the aerosol generating apparatus 100A according to the first configuration example.

The holding portion 140 has an internal space 141, and holds a stick-type base material 150 while accommodating a part of the stick-type base material 150 in the internal space 141. The holding portion 140 has an opening 142 through which the internal space 141 communicates with the outside, and holds the stick-type base material 150 inserted into the internal space 141 from the opening 142. For example, the holding portion 140 is a cylindrical body having the opening 142 and a bottom portion 143 as a bottom surface, and defines the columnar internal space 141. The holding portion 140 also has a function of defining a flow path of air supplied to the stick-type base material 150. An air inlet hole, which is an inlet of the air to the flow path, is disposed, for example, in the bottom portion 143. On the other hand, an air outlet hole, which is an outlet of the air from the flow path, is the opening 142.

The stick-type base material 150 includes a base material portion and an inhalation port portion 152. A base material portion 151 includes an aerosol source and a flavor source. In this configuration example, the aerosol source is not limited to a liquid, and may be a solid. The flavor source is a constituent component for imparting a flavor ingredient to the aerosol. The flavor source may include a flavor ingredient derived from tobacco or non-tobacco. In a state in which the stick-type base material 150 is held by the holding portion 140, at least a part of the base material portion 151 is accommodated in the internal space 141, and at least a part of the inhalation port portion 152 protrudes from the opening 142. When the user holds the inhalation port portion 152 protruding from the opening 142 in the mouth and inhales, the air flows into the internal space 141 from the air inlet hole (not shown), and reaches the mouth of the user together with the aerosol generated from the base material portion 151 and imparted with the flavor ingredient.

In the example illustrated in FIG. 3, the heating portion 121B is formed in a film shape, and is disposed to cover an outer periphery of the holding portion 140. When the heating portion 121B generates heat, the base material portion 151 of the stick-type base material 150 is heated from the outer periphery, and the aerosol is generated.

The heat insulation portion 144 prevents heat transfer from the heating portion 121B to other constituent components. For example, the heat insulation portion 144 is made of a vacuum heat insulating material or an aerogel heat insulating material.

The configuration example of the aerosol generating apparatus 100B has been described above. It is needless to say that the configuration of the aerosol generating apparatus 100B is not limited to the above, and may adopt various configurations as exemplified below.

As an example, the heating portion 121B may be formed in a blade shape and disposed to protrude from the bottom portion 143 of the holding portion 140 into the internal space 141. In this case, the blade-shaped heating portion 121B is inserted into the base material portion 151 of the stick-type base material 150, and heats the base material portion 151 of the stick-type base material 150 from the inside. As another example, the heating portion 121B may be disposed to cover the bottom portion 143 of the holding portion 140. In addition, the heating portion 121B may be implemented by a combination of two or more of a first heating portion covering the outer periphery of the holding portion 140, a blade-shaped second heating portion, and a third heating portion covering the bottom portion 143 of the holding portion 140.

As another example, the holding portion 140 may include an opening and closing mechanism such as a hinge that opens and closes a part of an outer shell forming the internal space 141. The holding portion 140 may open and close the outer shell to sandwich and hold the stick-type base material 150 inserted into the internal space 141. In that case, the heating portion 121B may be provided at a sandwiching and holding place in the holding portion 140 and heat the stick-type base material 150 while pressing the stick-type base material 150.

The method for atomizing the aerosol source is not limited to heating by the heating portion 121B. For example, the method for atomizing the aerosol source may be induction heating.

The aerosol generating apparatus 100B may further include the heating portion 121A, the liquid guiding portion 122, the liquid storage unit 123, and the air flow path 180 according to the first configuration example, and the air outlet hole 182 of the air flow path 180 may also serve as the air inlet hole through which the air flows into the internal space 141. In this case, the mixed fluid of the aerosol generated by the heating portion 121A and the air flows into the internal space 141, is further mixed with the aerosol generated by the heating portion 121B, and reaches the oral cavity of the user.

### [Heating Profile Table]

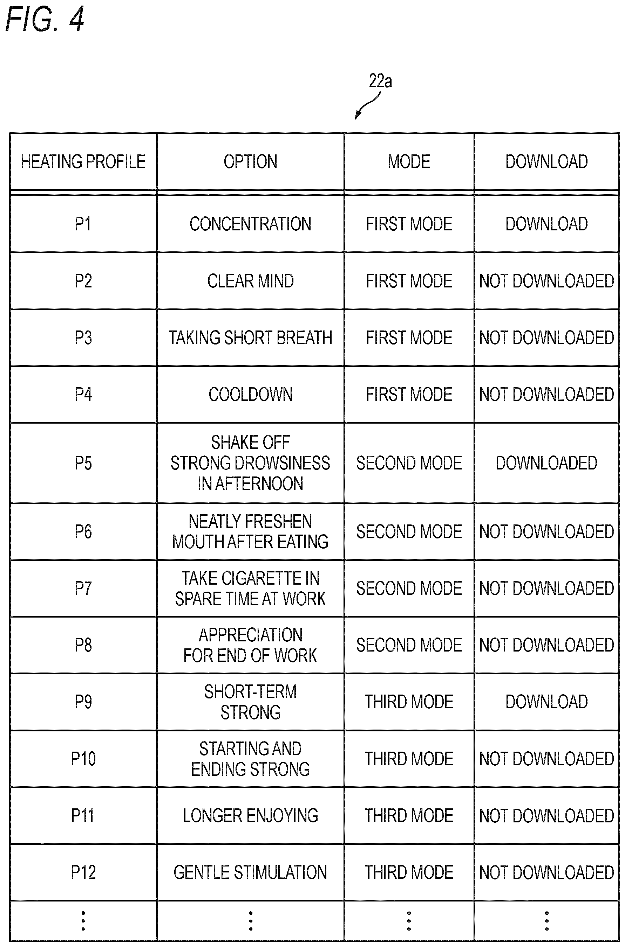

FIG. 4 is a diagram illustrating an example of the heating profile table 22a. As illustrated in FIG. 4, the heating profile table 22a stores heating profile information, option information, mode information, and download information in an associated manner.

Here, the option information indicates a predetermined option that the electronic device 20 can present to the user. Further, the heating profile information indicates a heating profile corresponding to the option indicated by the option information.

The option indicated by the option information, that is, the option associated with the heating profile includes, for example, an option related to a mental state of the user. The option related to the mental state of the user may include, for example, an option indicating that the user is in a concentration state, and an option indicating that an excitation state of the user is kept down.

The option indicating that the user is in a concentration state is, for example, an option of content by which the user is reminded of secretion of dopamine, adrenalin, or the like. On the other hand, the option indicating that the excitation state of the user is kept down is, for example, an option of content by which the user is reminded of relaxation, refresh, or secretion of serotonin. The option indicating that an excitation state of the user is kept down may include an option indicating that the excitation state of the user is temporarily kept down, and an option indicating that the excitation state of the user is gently kept down. Further, the option indicating that an excitation state of the user is kept down may include an option indicating that the excitation state of the user is rapidly kept down.

In the present embodiment, as the option related to the mental state of the user, options "mental concentration", "clear mind", "taking a short breath", and "cooldown" are provided. The option "mental concentration" is an example of the option indicating that the user is in the concentration state. The option "clear mind" is an example of the option indicating that the excitation state of the user is kept down, and more specifically, is an option indicating that the user is in the concentration state after the excitation state of the user is kept down (in other word, the excitation state of the user is temporarily kept down). The option "taking a short breath" is an example of the option indicating that the excitation state of the user is gently kept down. The option "cooldown" is an example of the option indicating that the excitation state of the user is rapidly kept down.

Further, the option associated with the heating profile may be an option related to a predetermined action or event. Here, the predetermined action may be an action that can be a trigger for changing the smoking taste and flavor desired by the user, and may include, for example, any one of work, sleep, wakefulness, eating and drinking such as a meal, and exercise. In addition, the predetermined event may be an event (activity) that may be a trigger for changing the smoking taste and flavor desired by the user, and may include, for example, a drinking party. The drinking party is a meal meeting during which an alcoholic beverage is provided.

The option related to the predetermined action or event may include, for example, an option indicating a state before the predetermined action or event, an option indicating a state during the predetermined action or event, and an option indicating a state after the predetermined action or event.

In the present embodiment, as the option related to the predetermined action or event, options "shake off strong drowsiness in afternoon", "neatly freshen mouth after eating", "take cigarette in spare time at work", and "appreciation for end of work" are provided. The option "shake off strong drowsiness in afternoon" is an example of an option indicating a predetermined action called "shake off drowsiness (that is, wakefulness)". The option "neatly freshen mouth after eating" is an example of an option indicating an action after a predetermined action called "meal". The option "take cigarette in spare time at work" is an example of an option indicating an action during a predetermined action (or event) called "work". The option "appreciation for end of work" is an example of an option indicating an action after the predetermined action (or event) called "work".

Further, the option associated with the heating profile may be an option related to the smoking taste and flavor. The option related to the smoking taste and flavor may include, for example, an option indicating an intensity of a stimulation due to taste (that is, a sensation of tobacco), an option indicating a duration of the smoking taste, and an option indicating a transition of the intensity of the stimulation due to the smoking taste. Further, the option related to the smoking taste and flavor may include an option indicating the amount of generated aerosol (hereinafter, also referred to as "the amount of vapor").

In the present embodiment, as the option related to the smoking taste and flavor, options "short-term strong", "starting and ending strong", "longer enjoying", and "gentle stimulation" are provided. The option "short-term strong" is an example of an option indicating that the stimulation due to the smoking taste is strong and the duration of the smoking taste is short. The option "starting and ending strong" is an example of the option indicating the transition of the intensity of the stimulation due to the taste, and more specifically, the option is an option indicating that the smoking taste at the start of inhalation (for example, up to the third inhalation) and the smoking taste at the end of inhalation (for example, the tenth inhalation and later) are stronger than the taste in a period therebetween. The option "longer enjoying" is an example of an option indicating that the duration of smoking taste is long. The option "gentle stimulation" is an example of an option indicating that the stimulation due to the smoking taste is gentle.

In the heating profile table 22a, the mode information indicates any one of a first mode, a second mode, and a third mode. Specifically, the mode information indicating the "first mode" is associated with the option related to the mental state of the user. The mode information indicating the "second mode" is associated with the option related to the predetermined action or event. Further, the mode information indicating the "third mode" is associated with the option related to the smoking taste and flavor.

Although details will be described later, in the present embodiment, the option associated with the mode information indicating the "first mode", that is, the option related to the mental state of the user is displayed on an option presentation screen for first mode 600. The option associated with the mode information indicating the "second mode", that is, the option related to the predetermined action or event is displayed on an option presentation screen for second mode 700. Further, the option associated with the mode information indicating the "third mode", that is, the option related to the smoking taste and flavor is displayed on an option presentation screen for third mode 800.

In the heating profile table 22a, the download information indicates whether the electronic device 20 has already downloaded the corresponding heating profile (that is, whether the electronic device 20 has not yet downloaded the corresponding heating profile) from the heating profile distribution server 30.

The heating profile table 22a may be stored in the storage unit 22 of the electronic device 20 as the heating profile changing application is installed in the electronic device 20, for example. Further, the electronic device 20 may appropriately update the heating profile table 22a. For example, when the electronic device 20 downloads a certain heating profile from the heating profile distribution server 30, the electronic device 20 updates the download information corresponding to the heating profile from "not downloaded" to "downloaded".

### [Process Executed by Electronic Device]

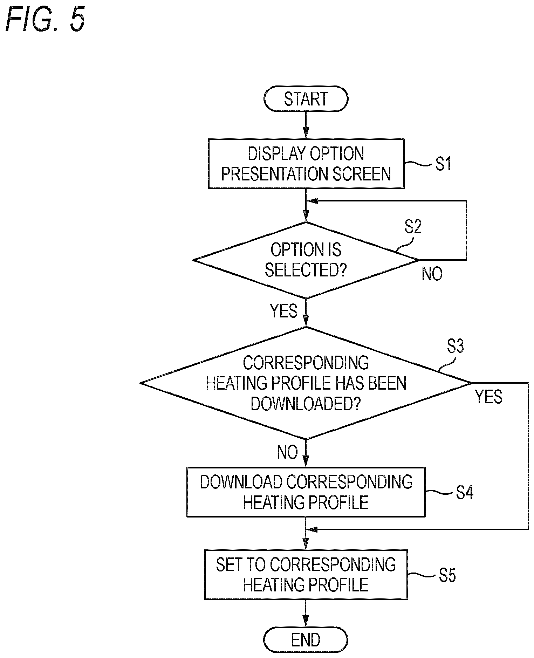

FIG. 5 is a flowchart illustrating an example of a heating profile changing process (a heating profile changing method) executed by the electronic device 20. As illustrated in FIG. 5, first, the electronic device 20 displays an option presentation screen for presenting the plurality of options to the user on the display device of the electronic device 20 (step S1). For example, when the electronic device 20 activates the heating profile changing application based on an operation of the user, the electronic device 20 performs the process of step S1 and displays the option presentation screen. At this time, the electronic device 20 displays an option presentation screen selected by the user from the option presentation screen for first mode 600, the option presentation screen for second mode 700, and the option presentation screen for third mode 800, which will be described later.

Next, the electronic device 20 waits until the selection of any option among the plurality of options presented on the option presentation screen is received (step S2: NO). Then, when any option is selected by the user (step S2: YES), the electronic device 20 refers to the heating profile table 22a and specifies a heating profile corresponding to the selected option (hereinafter, also referred to as "the corresponding heating profile"), and determines whether the corresponding heating profile has been downloaded (step S3).

If the corresponding heating profile has been downloaded (step S3: YES), the electronic device 20 proceeds to the process of step S5 as it is. On the other hand, if the corresponding heating profile has not been downloaded (step S3: NO), the electronic device 20 downloads the corresponding heating profile from the heating profile distribution server 30 (step S4).

In step S4, for example, the electronic device 20 transmits a distribution request including identification information of the electronic device 20 and information indicating the corresponding heating profile to the heating profile distribution server 30. The heating profile distribution server 30 transmits the corresponding heating profile to the electronic device 20 as a distribution request source in response to the distribution request. Accordingly, the electronic device 20 can download the corresponding heating profile from the heating profile distribution server 30.

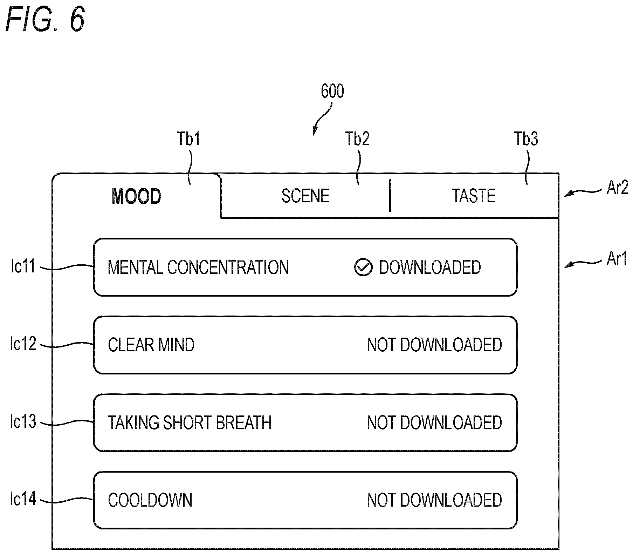

Then, the electronic device 20 sets the heating profile of the aerosol generating apparatus 10 to the corresponding heating profile (step S5), and ends the series of processes illustrated in FIG. 6. In step S5, for example, the electronic device 20 transmits the corresponding heating profile and an instruction for changing to the corresponding heating profile to the aerosol generating apparatus 10. When receiving the change instruction from the electronic device 20, the aerosol generating apparatus 10 sets the heating profile used for the temperature control of the heating portion in the next and subsequent times to the corresponding heating profile according to the change instruction. Accordingly, the electronic device 20 can change the heating profile of the aerosol generating apparatus 10 to the corresponding heating profile.

### [Specific Examples of Option Presentation Screen]

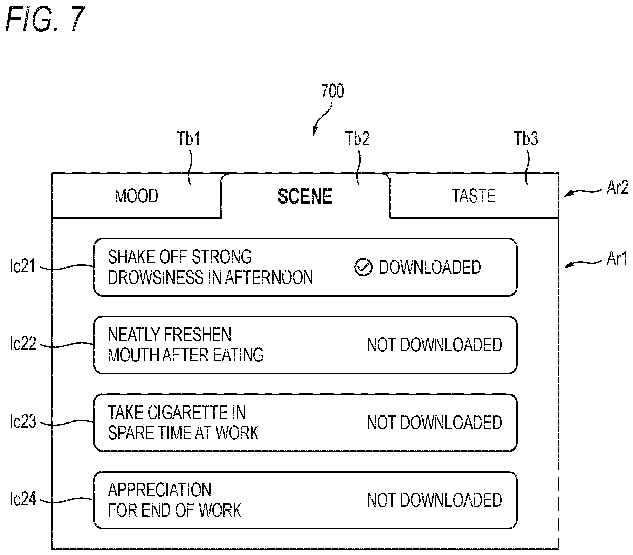

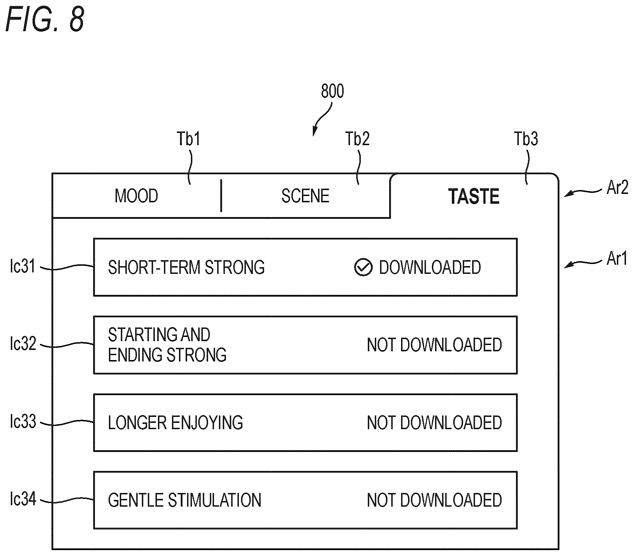

Next, specific examples of the option presentation screen displayed by the electronic device 20 will be described. FIG. 6 is a diagram illustrating an example of the option presentation screen for first mode 600 displayed by the electronic device 20. FIG. 7 is a diagram illustrating an example of the option presentation screen for second mode 700 displayed by the electronic device 20. FIG. 8 is a diagram illustrating an example of the option presentation screen for third mode 800 displayed by the electronic device 20.

In the present embodiment, the option presentation screen for first mode 600 illustrated in FIG. 6, the option presentation screen for second mode 700 illustrated in FIG. 7, and the option presentation screen for third mode 800 illustrated in FIG. 8 are provided as the option presentation screen displayed by the electronic device 20. Each of the option presentation screens 600, 700, and 800 is provided with an option display region Ar1. In the option display region Ar1, various option icons to be described later are displayed.

In each of the option presentation screens 600, 700, and 800, a mode switching tab display region Ar2 is provided above the option display region Ar1. In the mode switching tab display region Ar2, a first mode selection tab Tb1 labeled with "mood", a second mode selection tab Tb2 labeled with "scene", and a third mode selection tab Tb3 labeled with "smoking taste" are displayed.

In displaying the option presentation screen, for example, when the first mode selection tab Tb1 is selected (for example, tapped) by the user, the electronic device 20 displays the option presentation screen for first mode 600. When the second mode selection tab Tb2 is selected, the electronic device 20 displays the option presentation screen for second mode 700. Further, when the third mode selection tab Tb3 is selected, the electronic device 20 displays the option presentation screen for third mode 800. That is, the user can display a desired option presentation screen on the electronic device 20 by selecting a mode selection tab corresponding to the desired option presentation screen.

### [Option Presentation Screen For First Mode]

The option presentation screen for first mode 600 is a display screen that presents the plurality of options related to the mental state of the user. For example, the plurality of options, which include the option indicating that the user is in the concentration state and the option indicating that the excitation state of the user is kept down, are displayed on the option presentation screen for first mode 600. More specifically, on the option presentation screen for first mode 600, the option associated with the mode information indicating the "first mode" is displayed in the heating profile table 22a.

In the present embodiment, as the option related to the mental state of the user, the options "mental concentration", "clear mind", "taking a short breath", and "cooldown" described above are provided. Therefore, in the option display region Ar1 of the option presentation screen for first mode 600, an option icon Ic 11 labeled with the "mental concentration", an option icon Ic 12 labeled with the "clear mind", an option icon Ic13 labeled with the "taking a short breath", and an option icon Ic 14 labeled with "cooldown" are displayed.

For example, when the option icon Ic 11 is selected (for example, tapped) by the user, the electronic device 20 receives the option "mental concentration" as the option selected by the user. Similarly, when the option icon Ic12 is selected, the electronic device 20 receives the option "clear mind" as the option selected by the user. Further, when the option icon Ic 13 is selected, the electronic device 20 receives the option "taking a short breath" as the option selected by the user. Further, when the option icon Ic 14 is selected, the electronic device 20 receives the option "cooldown" as the option selected by the user.

As described above, the electronic device 20 can present the plurality of options related to the mental state of the user to the user via the option presentation screen for first mode 600, and can receive the selection of any option among the options. In addition, in response to receiving the selection of any option, the electronic device 20 changes the heating profile of the aerosol generating apparatus 10 to a heating profile corresponding to the selected option. Accordingly, the user can select the option based on the mental state thereof, and can appropriately change the heating profile of the aerosol generating apparatus 10 in accordance with the mental state of the user. That is, by simply selecting an option that suits the mental state of the user among the options presented on the option presentation screen for first mode 600, the user can easily obtain a desired smoking taste and flavor without changing the type of the aerosol source or the flavor source.

In addition, the plurality of options presented on the option presentation screen for first mode 600 include the option indicating that the user is in the concentration state (for example, the option "mental concentration"), and the option indicating that the excitation state of the user is kept down (for example, the option "clear mind", the option "taking a short breath", or the option "cooldown"). Accordingly, the user can select the option based on the mental state thereof (specifically, whether the user wants to be in the concentration state or keep down the excitation state), and can appropriately change the heating profile in accordance with such a mental state of the user.

Here, the option indicating that the excitation state of the user is kept down includes at least two of the option indicating that the excitation state of the user is temporarily kept down (for example, the option "clear mind"), the option indicating that the excitation state of the user is gently restrained (for example, the option "taking a short breath"), and the option indicating that the excitation state of the user is rapidly kept down (for example, the option "cooldown"). Accordingly, it is possible to change the heating profile to a heating profile more suitable for the mental state of the user who wants to keep down the excitation state (specifically, a method of keeping down the excitation state desired by the user).

Further, the option presentation screen for first mode 600 also displays information indicating whether the heating profiles corresponding to the presented options have been downloaded. For example, the "downloaded" is displayed with respect to the option icon (for example, see the option icon Ic11) of the option for which the corresponding heating profile has been downloaded. On the other hand, the "not downloaded" is displayed with respect to the option icon (for example, see the option icon Ic 12) of the option for which the corresponding heating profile has not yet been downloaded. Accordingly, the user can know in advance whether the heating profile is downloaded when the option represented by each of the option icons Ic 11, Ic12, Ic13, and Ic14 is selected. Therefore, the user can select the option in consideration of the necessity of downloading the heating profile.

### [Option Presentation Screen For Second Mode]

The option presentation screen for second mode 700 is a display screen that presents the plurality of options related to the predetermined action or event. For example, the plurality of options, which include at least two of the option indicating the state before the predetermined action or event, the option indicating the state during the predetermined action or event, and the option indicating the state after the predetermined action or event, are displayed on the option presentation screen for second mode 700. More specifically, on the option presentation screen for second mode 700, the option associated with the mode information indicating the "second mode" is displayed in the heating profile table 22a.

In the present embodiment, as the option related to the predetermined action or event, the options "shake off strong drowsiness in afternoon", "neatly freshen mouth after eating", "take cigarette in spare time at work", and "appreciation for end of work" described above are provided. Therefore, in the option display region Ar1 of the option presentation screen for second mode 700, for example, an option icon Ic21 labeled with the "shake off strong drowsiness in afternoon", an option icon Ic22 labeled with the "neatly freshen mouth after eating", an option icon Ic23 labeled with the "take cigarette in spare time at work", and an option icon Ic24 labeled with the "appreciation for end of work" are displayed.

For example, when the option icon Ic21 is selected by the user, the electronic device 20 receives the option "shake off strong drowsiness in afternoon" as the option selected by the user. Similarly, when the option icon Ic22 is selected, the electronic device 20 receives the option "neatly freshen mouth after eating" as the option selected by the user. Further, when the option icon Ic23 is selected, the electronic device 20 receives the option "take cigarette in spare time at work" as the option selected by the user. Further, when the option icon Ic24 is selected, the electronic device 20 receives the option "appreciation for end of work" as the option selected by the user.

As described above, the electronic device 20 can present the plurality of options related to the predetermined action or event to the user via the option presentation screen for second mode 700, and can receive the selection of any option among the options. In addition, when the electronic device 20 receives the selection of any option, the electronic device 20 changes the heating profile of the aerosol generating apparatus 10 to a heating profile corresponding to the selected option. Accordingly, the user can select the option based on the action thereof or the event in which the user participates, and can appropriately change the heating profile of the aerosol generating apparatus 10 in accordance with a situation of the user. That is, by simply selecting an option satisfying the action of the user or the event in which the user participates among the options presented on the option presentation screen for second mode 700, the user can easily obtain desired smoking taste and flavor without changing the type of the aerosol source or the flavor source.

Further, the plurality of options presented on the option presentation screen for second mode 700 include at least two of the option indicating the state before the predetermined action or event, the option indicating the state during the predetermined action or event, and the option indicating the state after the predetermined action or event. Accordingly, the user can select the option based on the action thereof or the event in which the user participates (specifically, a chronological relation between the time of aerosol inhalation and the predetermined action or event), and can appropriately change the heating profile in accordance with the situation of the user.

Further, the predetermined action described above can be, for example, any one of work, sleep, wakefulness, eating and drinking, and exercise. Accordingly, the user can select the option based on the action by which the desired smoking taste and flavor can be changed, and can appropriately change the heating profile in accordance with the situation of the user.

Further, the predetermined event described above can be, for example, a meal meeting (that is, a drinking party) during which an alcoholic beverage is provided. Accordingly, the user can select the option based on the event by which the desired smoking taste and flavor can be changed, and can appropriately change the heating profile in accordance with the situation of the user.

Here, the option related to the predetermined event will be additionally described. For example, the smoking taste and flavor desired by the user participating in the drinking party can be changed depending on a time elapsed from the start of the drinking party. Therefore, as the option related to the predetermined event, for example, options "drinking party - first half" and "drinking party - latter half" may be provided, and option icons corresponding thereto may be displayed on the option presentation screen for second mode 700. Then, when the user selects the option "drinking party - first half", the electronic device 20 may change the heating profile of the aerosol generating apparatus 10 to a heating profile corresponding to the option "drinking party - first half". On the other hand, when the user selects the option "drinking party - latter half", the electronic device 20 may change the heating profile of the aerosol generating apparatus 10 to a heating profile corresponding to the option "drinking party - latter half". The heating profile corresponding to the option "drinking party first half" can be, for example, a heating profile by which a smoking taste stronger than that obtained by a heating profile corresponding to the option "drinking party - latter half is obtained. With this configuration, the user can select the option based on the time elapsed from the start of the drinking party, and can appropriately change the heating profile in accordance with the situation of the user (that is, the time elapsed from the start of the drinking party). The first half and the latter half are determined based on a time set for the event. In addition, in a case in which the drinking party continues continuously, the option may be changed in the order of the drinking party. Further, as the option related to the predetermined event, for example, an option "before start of drinking party" and an option "after end of drinking party" may be provided. Then, when the user selects the option "before start of drinking party", the electronic device 20 may change the heating profile of the aerosol generating apparatus 10 to a heating profile corresponding to the option "before start of drinking party". On the other hand, when the user selects the option "after end of drinking party", the electronic device 20 may change the heating profile of the aerosol generating apparatus 10 to a heating profile corresponding to the option "after end of drinking party".

Further, the option presentation screen for second mode 700 also displays information indicating whether the heating profiles corresponding to the presented options have been downloaded. For example, the "downloaded" is displayed with respect to the option icon (for example, see the option icon Ic21) of the option for which the corresponding heating profile has been downloaded. On the other hand, the "not downloaded" is displayed with respect to the option icon (for example, see the option icon Ic22) of the option for which the corresponding heating profile has not been downloaded. Accordingly, the user can know in advance whether the heating profile is downloaded when the option represented by each of the option icons Ic21, Ic22, Ic23, and Ic24 is selected. Therefore, the user can select the option in consideration of the necessity of downloading the heating profile.

### [Option Presentation Screen For Third Mode]

The option presentation screen for third mode 800 is a display screen that presents the plurality of options related to the smoking taste and flavor. For example, the plurality of options, which include at least one of the option indicating the intensity of the stimulation due to the smoking taste, the option indicating the duration of the smoking taste, and the option indicating the transition of the intensity of the stimulation due to the smoking taste, are displayed on the option presentation screen for third mode 800. More specifically, on the option presentation screen for third mode 800, the option associated with the mode information indicating the "third mode" is displayed in the heating profile table 22a.

In the present embodiment, as the option related to the smoking taste and flavor, the options "short-term strong", "starting and ending strong", "longer enjoying", and "gentle stimulation" are provided. Therefore, in the option display region Ar1 of the option presentation screen for third mode 800, an option icon Ic31 labeled with the "short-term strong", an option icon Ic32 labeled with the "starting and ending strong", an option icon Ic33 labeled with the "longer enjoying", and an option icon Ic34 labeled with "gentle stimulation" are displayed.

For example, when the option icon Ic31 is selected by the user, the electronic device 20 receives the option "short-term strong" as the option selected by the user. Similarly, when the option icon Ic32 is selected, the electronic device 20 receives the option "starting and ending strong" as the option selected by the user. Further, when the option icon Ic33 is selected, the electronic device 20 receives the option "longer enjoying" as the option selected by the user. Further, when the option icon Ic34 is selected, the electronic device 20 receives the option "longer enjoying" as the option selected by the user.

As described above, the electronic device 20 can present the plurality of options related to the smoking taste and flavor to the user via the option presentation screen for third mode 800, and can receive the selection of any option among the options. In addition, when the electronic device 20 receives the selection of any option, the electronic device 20 changes the heating profile of the aerosol generating apparatus 10 to a heating profile corresponding to the selected option. Accordingly, the user can select the option based on the desired smoking taste and flavor, and can appropriately change the heating profile of the aerosol generating apparatus 10 in accordance with the smoking taste and flavor desired by the user. That is, by simply selecting an option satisfying the desired smoking taste and flavor of the user among the options presented on the option presentation screen for third mode 800, the user can easily obtain the desired smoking taste and flavor without changing the type of the aerosol source or the flavor source.

Further, the plurality of options presented on the option presentation screen for third mode 800 include any one of the option indicating the intensity of the stimulation (that is, the sensation of tobacco) due to the smoking taste, the option indicating the duration of the smoking taste, and the option indicating the transition of the intensity of the stimulation due to the smoking taste. Accordingly, the user can select the option based on a desired smoking taste (specifically, the intensity of the sensation of tobacco, the duration of the sensation of tobacco, and the transition of the intensity of the sensation of tobacco), and can appropriately change the heating profile in accordance with such a smoking taste and flavor desired by the user.

In addition, the plurality of options presented on the option presentation screen for third mode 800 may include the option indicating the amount of vapor. Accordingly, the user can select the option based on the amount of vapor desired by the user, and can appropriately change the heating profile in accordance with the amount of vapor desired by the user.

In addition, the plurality of options presented on the option presentation screen for third mode 800 may include an option related to a flavor. Here, the senses of taste and smell (such as a sensation of coolness or a sensation of exhilaration) that are perceived by inhaling menthol added to tobacco leaves as an additive are collectively defined as a "sensation of menthol". The sense of smell (flavor) that is perceived by inhaling a flavor added to the tobacco leaves as an additive is defined as a "sensation of flavor".

For example, the plurality of options presented on the option presentation screen for third mode 800 may include an option indicating an intensity of the sensation of menthol or the sensation of flavor. In this way, the user can select the option based on a desired sensation of menthol or sensation of flavor (that is, a flavor), and can appropriately change the heating profile in accordance with such a sensation of menthol or sensation of flavor desired by the user.

Further, the option presentation screen for third mode 800 also displays information indicating whether the heating profiles corresponding to the presented options have been downloaded. For example, the "downloaded" is displayed with respect to the option icon (for example, see the option icon Ic31) of the option for which the corresponding heating profile has been downloaded. On the other hand, the "not downloaded" is displayed with respect to the option icon (for example, see the option icon Ic32) of the option for which the corresponding heating profile has not been downloaded. Accordingly, the user can know in advance whether the heating profile is downloaded when the option represented by each of the option icons Ic31, Ic32, Ic33, and Ic34 is selected. Therefore, the user can select the option in consideration of the necessity of downloading the heating profile.

Next, the heating profile will be additionally described. As described above, the heating profile is the information defining the time-series transition of the target temperature of the heating portion in the predetermined period. The control unit of the aerosol generating apparatus 10 controls the supply of the electric power from the power supply portion to the heating portion according to the heating profile. Specifically, the control unit of the aerosol generating apparatus 10 controls the supply of the electric power to the heating portion by adjusting a duty ratio of the electric power supplied from the power supply portion to the heating portion based on a difference between a temperature of the heating portion and the target temperature determined by the heating profile.

According to heating control using such a heating profile, for example, the temperature of the heating portion is controlled to increase to a predetermined first temperature in a first period immediately after the start of heating, and the temperature of the heating portion is controlled to once decrease to a second temperature lower than the first temperature in a second period after the first period. Then, the temperature of the heating portion is controlled to increase again to a third temperature higher than the second temperature in a third period after the second period. In the third period in which the heating portion reaches the third temperature, the user can perform the aerosol inhalation using the aerosol generating apparatus 10.

In each of the heating profiles described above, for example, the lengths of the first period, the second period, and the third period are different, or the target temperatures of the heating portion in the respective periods are different. For example, a heating profile in which the sensation of tobacco is made stronger or the amount of vapor is made more than that of a usual case becomes a heating profile in which the target temperature in each period is higher and the first period (that is, a preheating period) is longer as compared with a heating profile in which the sensation of tobacco or the amount of vapor of the usual case is obtained.

More specifically, in the aerosol generating apparatus 100B in which the base material portion 151 including the aerosol source and the flavor source is heated by the heating portion 121B, as the temperature of the heating portion 121B is increased, the amount of vapor can be increased, and the sensation of tobacco can be enhanced. On the other hand, in the aerosol generating apparatus 100A in which the aerosol source held in the liquid guiding portion 122 is heated by the heating portion 121A, it is also possible to change only the amount of vapor without depending on the smoking taste.

As described above, according to the electronic device 20 of the present embodiment, it is possible to appropriately change the heating profile of the aerosol generating apparatus 10 in accordance with the situation of the user. Therefore, the user can easily obtain the desired smoking taste and flavor (that is, a high-quality experience) without changing the type of the aerosol source or the flavor source. Therefore, it is possible to improve marketability of the aerosol generating apparatus 10.

In the examples described above, the option related to the mental state of the user, the option related to the predetermined action or event, and the option related to the smoking taste and flavor are displayed on different option presentation screens, respectively, but the present invention is not limited thereto. For example, the electronic device 20 may display, on the same option presentation screen, two or more options among the option related to the mental state of the user, the option related to the predetermined action or event, and the option related to the smoking taste and flavor.

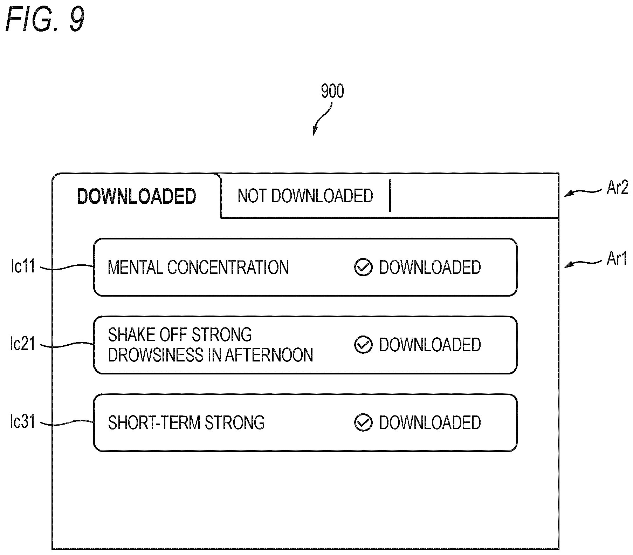

FIG. 9 is a diagram illustrating an option presentation screen 900 which is another example of the option presentation screen displayed by the electronic device 20. As illustrated in FIG. 9, the electronic device 20 may simultaneously display (present), for example, the option icon Ic11 of the "mental concentration" as the option related to the mental state of the user, the option icon Ic21 of the "shake off strong drowsiness in afternoon" as the option related to the predetermined action or event, and the option icon Ic31 of the "short-term strong" as the option related to the smoking taste and flavor, on the option presentation screen 900. For example, the electronic device 20 may classify the options into the option corresponding to the downloaded heating profile and the option corresponding to the heating profile that is not downloaded, and may divide the option presentation screen displaying these options.

In addition, in the examples described above, the heating profile is changed to the heating profile corresponding to the option selected by the user, but the present invention is not limited thereto.

For example, the electronic device 20 may be configured to acquire position information of the user, and may change the heating profile based on the acquired position information. In this way, for example, the heating profile can be changed in accordance with the fact that the user is at home, in a car of the user, at a workplace, at a smoking area, or at a pub. As a specific example, it is possible to change the heating profile to a heating profile suitable for the drinking party in accordance with the fact that the user is at the pub. The electronic device 20 may acquire the position information of the user by using a satellite positioning system such as a global positioning system (GPS), and may acquire the position information of the user by communicating with a vehicle or beacons installed at respective places.

For example, the electronic device 20 may be configured to acquire biological information (for example, a heart rate) of the user, and may change the heating profile based on the acquired biological information. In this way, for example, it is possible to change the heating profile in accordance with the heart rate or the like related to the mental state of the user. As a specific example, the user can change the heating profile to a heating profile suitable for keeping down the excitation state of the user in response to the fact that the heart rate is equal to or greater than a threshold value (that is, the user is in the excitation state).

In addition, for example, the electronic device 20 may be configured to acquire schedule information indicating a schedule of the user, and may change the heating profile based on the acquired schedule information. In this way, for example, it is possible to change the heating profile by determining whether the user is participating in a drinking party or the like based on the schedule information.

In addition, in the examples described above, an example in which the information processing apparatus according to the present invention is implemented by the electronic device 20 is described, but the present invention is not limited thereto. For example, the information processing apparatus according to the present invention may be implemented by the aerosol generating apparatus 10. In this case, for example, the processes of the electronic device 20 described above may be performed by the control units 116A and 116B of the aerosol generating apparatus 10. Further, in this case, the UI unit 24 of the electronic device 20 described above can be substituted by, for example, the sensor units 112A and 112B or the notification portions 113A and 113B.

Further, the heating profile changing method described in the above embodiment can be achieved by executing a program (a heating profile changing program. For example, a heating profile changing application) prepared in advance by a computer. The heating profile changing program is stored in a computer-readable storage medium and is executed by being read from the storage medium. In addition, the heating profile changing program may be provided in the form of being stored in a nonvolatile (non-transitory) storage medium such as a flash memory, and may be provided via a network such as the Internet. The computer that executes the heating profile changing program may be a computer included in the aerosol generating apparatus 10, may be a computer included in the electronic device 20 such as a smartphone, a tablet terminal, or a personal computer that can communicate with the aerosol generating apparatus 10, and may be a server device that can communicate with the aerosol generating apparatus 10 and the electronic device 20.

Although the embodiment of the present invention has been described above with reference to the accompanying drawings, it is needless to say that the present invention is not limited to such an embodiment. It is apparent to a person skilled in the art that various changes and modifications may be conceived within the scope described in the claims, and it is understood that the changes and the modifications naturally fall within the technical scope of the present invention. In addition, the constituent components described in the above embodiment may be optionally combined without departing from the spirit of the invention.

In the present description, at least the following matters are described. In parentheses, corresponding constituent components and the like in the embodiment described above are indicated as examples, but the present invention is not limited thereto.
(1) An information processing apparatus (the electronic device 20) for changing a heating profile of an aerosol generating apparatus (the aerosol generating apparatuses 10, 100A, and 100B) that includes a heating portion (the heating portions 121A, 121B) heating an aerosol source or a flavor source,
   the information processing apparatus includes:
   an output unit (the UI unit 24) configured to output information indicating a plurality of options; and
   a control unit (the control unit 21) configured to receive selection of one option among the plurality of options, and change the heating profile to a heating profile corresponding to the selected option, and
   the control unit is configured to cause the output unit to output the information indicating the plurality of options including at least one of an option related to a mental state of a user, an option related to a predetermined action or event, and an option related to a smoking taste and flavor in the aerosol generating apparatus.

According to (1), the plurality of options including at least one of the option related to the mental state of the user, the option related to the predetermined action or event, and the option related to the smoking taste and flavor can be presented to the user, and the heating profile can be changed to the heating profile corresponding to the option selected by the user. Accordingly, it is possible to appropriately change the heating profile of the heating portion for heating the aerosol source or the flavor source in accordance with the situation of the user.

(2) The information processing apparatus according to (1), in which
the control unit is configured to cause the information indicating the plurality of options related to the mental state of the user to be output, and
the plurality of options include a first option indicating that the user is in a concentration state, and a second option indicating that an excitation state of the user is kept down.

According to (2), the plurality of options presented to the user include the first option indicating that the user is in the concentration state and the second option indicating that the excitation state of the user is kept down. Accordingly, the user can select the option based on the mental state thereof, and can appropriately change the heating profile in accordance with the mental state of the user.

(3) The information processing apparatus according to (2), in which
the second option includes at least two of an option indicating that the excitation state of the user is temporarily kept down, an option indicating that the excitation state of the user is gently kept down, and an option indicating that the excitation state of the user is rapidly kept down.

According to (3), the second option indicating that the excitation state of the user is kept down includes at least two of the option indicating that the excitation state of the user is temporarily kept down, the option indicating that the excitation state of the user is gently kept down, and the option indicating that the excitation state of the user is rapidly kept down. Accordingly, it is possible to change the heating profile to the heating profile more suitable for the mental state of the user who wants to keep down the excitation state.

(4) The information processing apparatus according to (1), in which
the control unit is configured to cause the information indicating the plurality of options related to the predetermined action or event to be output, and
the plurality of options include at least two of a first option indicating a state before the predetermined action or event, a second option indicating a state during the predetermined action or event, and a third option indicating a state after the predetermined action or event.

According to (4), the plurality of options presented to the user include at least two of the first option indicating the state before the predetermined action or event, the second option indicating the state during the predetermined action or event, and the third option indicating the state after the predetermined action or event. Accordingly, the user can select the option based on the action thereof or the event in which the user participates, and can appropriately change the heating profile in accordance with the situation of the user.

(5) The information processing apparatus according to (4), in which
the predetermined action includes any one of work, sleep, wakefulness, eating and drinking, and exercise.

According to (5), the user can select the option based on the action by which the desired smoking taste and flavor can be changed, and can appropriately change the heating profile in accordance with the situation of the user.

(6) The information processing apparatus according to (4), in which
the predetermined event includes a meal meeting during which an alcoholic beverage is provided.

According to (6), the user can select the option based on the event by which the desired smoking taste and flavor can be changed, and can appropriately change the heating profile in accordance with the situation of the user.

(7) The information processing apparatus according to (1), in which
the control unit is configured to cause the information indicating the plurality of options related to the smoking taste and flavor to be output, and
the plurality of options include at least one of a first option indicating an intensity of stimulation in smoking taste, a second option indicating a duration of the smoking taste, a third option indicating a transition of the intensity of the stimulation in the smoking taste, and a fourth option indicating the amount of generated aerosol.

According to (7), the plurality of options presented to the user include at least one of the first option indicating the intensity of the stimulation due to the smoking taste, the second option indicating the duration of the smoking taste, the third option indicating the transition of the intensity of the stimulation due to the smoking taste, and the fourth option indicating the amount of generated aerosol. Accordingly, the user can select the option based on the smoking taste and flavor desired by the user, and can appropriately change the heating profile in accordance with the smoking taste and flavor desired by the user.

(8) A heating profile changing method for changing, by using an information processing apparatus (the electronic device 20), a heating profile of an aerosol generating apparatus (the aerosol generating apparatuses 10, 100A, and 100B) that includes a heating portion (the heating portions 121A, 121B) heating an aerosol source or a flavor source, in which
a control unit (the control unit 21) provided in the information processing apparatus executes a process including:
a first step (step S1) of causing an output unit (the UI unit 24) provided in the information processing apparatus to output information indicating a plurality of options;
a second step (step S2) of receiving selection of one option among the plurality of options; and
a third step (step S5) of changing the heating profile to a heating profile corresponding to the selected option, and
the first step comprises causing the information indicating the plurality of options to be output, the plurality of options including at least one of an option related to a mental state of a user, an option related to a predetermined action or event, and an option related to a smoking taste and flavor in the aerosol generating apparatus.

According to (8), the plurality of options including at least one of options related to the mental state of the user, the option related to the predetermined action or event, and the option related to the smoking taste and flavor can be presented to the user, and the heating profile can be changed to the heating profile corresponding to the option selected by the user. Accordingly, it is possible to appropriately change the heating profile of the heating portion for heating the aerosol source or the flavor source in accordance with the situation of the user.

(9) A heating profile changing program for changing, by using an information processing apparatus (the electronic device 20), a heating profile of an aerosol generating apparatus (the aerosol generating apparatuses 10, 100A, and 100B) that includes a heating portion (the heating portions 121A, 121B) heating an aerosol source or a flavor source, in which
a control unit (the control unit 21) provided in the information processing apparatus is caused to execute a process including:
a first step (step S1) of causing an output unit (the UI unit 24) provided in the information processing apparatus to output information indicating a plurality of options;
a second step (step S2) of receiving selection of one option among the plurality of options; and
a third step (step S5) of changing the heating profile to a heating profile corresponding to the selected option, and
the first step comprises causing the information indicating the plurality of options to be output, the plurality of options including at least one of an option related to a mental state of a user, an option related to a predetermined action or event, and an option related to a smoking taste and flavor in the aerosol generating apparatus.

According to (9), the plurality of options including at least one of the option related to the mental state of the user, the option related to the predetermined action or event, and the option related to the smoking taste and flavor can be presented to the user, and the heating profile can be changed to the heating profile corresponding to the option selected by the user. Accordingly, it is possible to appropriately change the heating profile of the heating portion for heating the aerosol source or the flavor source in accordance with the situation of the user.

### REFERENCE SIGNS LIST

10, 100A, 100B aerosol generating apparatus
121A, 121B heating portion
20 electronic device (information processing apparatus, computer)
21 control unit
Ic11 to Ie14, Ic21 to Ic24, Ic31 to Ic34 option icon (option)

## Claims

1. An information processing apparatus that changes a heating profile of an aerosol generating apparatus that includes a heating portion heating an aerosol source or a flavor source, wherein
the information processing apparatus comprises:
an output unit configured to output information indicating a plurality of options; and
a control unit configured to receive selection of one option among the plurality of options, and change the heating profile to a heating profile corresponding to the selected option, and
the control unit is configured to cause the output unit to output the information indicating the plurality of options including at least one of an option related to a mental state of a user, an option related to a predetermined action or event, and an option related to a smoking taste and flavor in the aerosol generating apparatus.

2. The information processing apparatus according to claim 1, wherein
the control unit is configured to cause the information indicating the plurality of options related to the mental state of the user to be output, and
the plurality of options include a first option indicating that the user is in a concentration state, and a second option indicating that an excitation state of the user is kept down.

3. The information processing apparatus according to claim 2, wherein
the second option includes at least two of an option indicating that the excitation state of the user is temporarily kept down, an option indicating that the excitation state of the user is gently kept down, and an option indicating that the excitation state of the user is rapidly kept down.

4. The information processing apparatus according to claim 1, wherein
the control unit is configured to cause the information indicating the plurality of options related to the predetermined action or event to be output, and
the plurality of options include at least two of a first option indicating a state before the predetermined action or event, a second option indicating a state during the predetermined action or event, and a third option indicating a state after the predetermined action or event.

5. The information processing apparatus according to claim 4, wherein
the predetermined action includes any one of work, sleep, wakefulness, eating and drinking, and exercise.

6. The information processing apparatus according to claim 4, wherein
the predetermined event includes a meal meeting during which an alcoholic beverage is provided.

7. The information processing apparatus according to claim 1, wherein
the control unit is configured to cause the information indicating the plurality of options related to the smoking taste and flavor to be output, and
the plurality of options include at least one of a first option indicating an intensity of stimulation in a smoking taste, a second option indicating a duration of the smoking taste, a third option indicating a transition of the intensity of the stimulation in the smoking taste, and a fourth option indicating the amount of generated aerosol.

8. A heating profile changing method for changing, by using an information processing apparatus, a heating profile of an aerosol generating apparatus that includes a heating portion heating an aerosol source or a flavor source, wherein
a control unit provided in the information processing apparatus performs a process comprising:
a first step of causing an output unit provided in the information processing apparatus to output information indicating a plurality of options;
a second step of receiving selection of one option among the plurality of options; and
a third step of changing the heating profile to a heating profile corresponding to the selected option, and
the first step comprises causing the information indicating the plurality of options to be output, the plurality of options including at least one of an option related to a mental state of a user, an option related to a predetermined action or event, and an option related to a smoking taste and flavor in the aerosol generating apparatus.

9. A heating profile changing program for changing, by using an information processing apparatus, a heating profile of an aerosol generating apparatus that includes a heating portion heating an aerosol source or a flavor source, wherein
a control unit provided in the information processing apparatus is caused to perform a process comprising:
a first step of causing an output unit provided in the information processing apparatus to output information indicating a plurality of options;
a second step of receiving selection of one option among the plurality of options; and
a third step of changing the heating profile to a heating profile corresponding to the selected option, and
the first step comprises causing the information indicating the plurality of options to be output, the plurality of options including at least one of an option related to a mental state of a user, an option related to a predetermined action or event, and an option related to a smoking taste and flavor in the aerosol generating apparatus.
